# EUROPEAN PATENT SPECIFICATION

(11) **EP 2 633 595 B1**
(45) Date of publication and mention of the grant of the patent: **13.12.2017**
(21) Application number: 11817484.6
(22) Date of filing: 21.10.2011
(51) Int. Cl.: H02H 1/04, H02H 1/06, H02H 3/10, H02H 3/16, H01H 71/12, H01H 83/00

(54) **A PROTECTION RELAY FOR SENSITIVE EARTH FAULT PORTECTION**
SCHUTZRELAIS FÜR EINEN WIRKSAMEN ERDSCHLUSS SCHUTZ
RELAIS DE PROTECTION POUR PROTECTION SENSIBLE CONTRE LES DÉFAUTS À LA TERRE

(30) Priority: 28.10.2010 IN 3213CH2010
(43) Date of publication of application: 04.09.2013
(73) Proprietor: ABB Schweiz AG, 5400 Baden (CH)
(72) Inventor: SUTHAR, Niraj, Vadodara 390 007, Gujarat (IN); SHAH, Vishal H., Vadodara 390021, Gujarat (IN); DESAI, Priyank, Bhavnagar 364001, Gujarat (IN); SHAFI, Mohammed, Y., Andhra Pradesh 501 301, Rangareddy District (IN)
(74) Representative: Zimmermann & Partner Patentanwälte mbB
(86) International application number: PCT/IB2011/002524
(87) International publication number: WO 2012/056287

(56) References cited:
- WO-A1-81/02496
- WO-A1-2009/101463
- DE-A1- 3 114 213
- US-A- 3 739 229
- US-A- 4 068 283

## Description

### Field of the Invention

The invention relates to the field of electrical power distribution. The invention specifically relates to design of protection feature in a self powered protection relay.

### Background of the Invention

A protection relay, also referred as Intelligent Electronic Device (IED), is a microcontroller based intelligent electronic device with a basic function to protect electrical equipment by tripping a circuit breaker and interrupting a power line in case of over current or earth fault situations. The tripping signal on behalf of a trip coil or other actuator of the circuit breaker is generated by the protection relay typically when the measured current in the line exceeds a nominal or preset value for a predefined time period. In certain situations such as Ring Main Units (RMU) installations in urban areas, a self-supplied relay may be preferably used. The self-supplied protection relay utilizes energy from the current sensing transformers to supply to the relay electronics circuit and the energy required to operate trip coils. The design of self-supplied relay have several constrains associated with it to ensure the measurements are accurate and sensitive. Also, special provisions are required to make its circuitry efficient and optimized for power consumption. Some of these constraints and method to generate power supply by controlled charging are disclosed in the WIPO publication WO 2009101463.

Inrush is mainly observed during switching in the large inductive loads like transformer, induction motor. In field, usually, the protection personnel set the earth fault settings on higher side (or even double) so as to avoid any mal-operation because of inrush at load start up. They then reduce the settings to lower values once load is under normal operation condition. This is only possible where point load (a single load like a motor or transformer) is being protected. The same may not be possible when a feeder is being protected. There could be different loads being switched in and out of the feeder and hence there could be multiple possibilities of inrush presence.
US 4,068,283 relates to a circuit breaker solid state trip unit incorporating trip indicating circuit. US 3,739,229 describes a sectionalizing switch control with an overcurrent sensing circuit and an inrush current restraint circuit actuated by means for sensing the presence of voltage at the sectionalizing switch. If a fault occurs which is not in the feeder line in which the sectionalizing switch is located, voltage will continue to be present at the sectionalizing switch if a branch line repeating circuit breaker opens or will be present upon reclosing of the main repeating circuit breaker. When this voltage is present at the sectionalizing switch following reclosing of the main circuit breaker, the voltage sensing means will actuate the inrush current restraint means so that the ground fault overcurrent sensing means will not operate to produce a signal to the sectionalizing switch counting means due to load inrush current. The restraint means will operate for a length of time determined by the time required for the inrush load current to subside. If the fault is a ground fault in the feeder line in which the sectionalizing switch is located and is not remote from the sectionalizing switch, the voltage sensing means will also sense voltage at the sectionalizing switch when the main repeating circuit breaker recloses. However, the greater current available due to a fault causes the overcurrent sensing means to operate in spite of the restraint means and produce an output signal to the sectionalizing switch counting means. If the ground fault continues during a predetermined number of opening operations by the main repeating circuit breaker, the ground fault overcurrent sensing means will produce a sufficient number of signals to the counting means for the latter to actuate the sectionalizing switch opening means to thereby cause opening of the switch contacts and isolation of the feeder line. Since the energy available from a ground fault overcurrent is relatively low compared to the energy available from the system voltage or current at the sectionalizing switch during the fault, power for operating the sectionalizing switch control is obtained from system voltage or current. The typical values for I nominal (In) are 1A and 5A. The nominal current for illustration purpose for the relay described in the invention is taken as 1A. The range 0.1 In to 20 In for earth setting is usual with auxiliary powered relay. Even in such relays, it is difficult to set relays for 0.1 In earth setting in field if they are not having inrush blocking protection. At places where inrush is evident and if relays are not having inrush protection and if relay is set for lower earth fault settings (of the order of 0.1 In), the relay generates trip imagining an earth fault. This is however, not a true earth fault as an inrush is not a fault condition.
In such cases, it could be possible that sensitive (lower) earth fault settings like 0.1 In is not used. The same is applicable to phase protection also. As a result, there are relays with a feature of automatic setting double the value for a limited time to avoid mal operation because of inrush.
Further, achieving the functionality for self powered relay is complicated. The self powered relays require minimum time and phase currents to get powered on. Also, the inrush detection requires some additional time. With all these constraints it is required that relay shall give trip within claimed minimum trip time if there is a genuine fault.
Further, the design of the relay needs to account for good current detection sensitivity. The sensitivity, here, refers the ability to sense the minimum of earth fault leakage currents. Better sensitivity helps to identify possible major fault earlier.
Only high end or point load protection relays have inrush protection in built as a feature. So, implementation of inrush protection in case of self powered relay with sensitive earth fault protection makes it a unique feature.
The invention presents an efficient self-powered three phase non-directional overcurrent and earth-fault protection IED.

### Brief Description of the Invention

It is an objective of the invention to provide a self powered relay according to claim 1. Said relay offers sensitive earth fault protection. This protection is being achieved in tandem with optimal power on trip time (switching to fault) and with integrated logic for inrush discrimination.

In an aspect of the invention, a self powered protection relay for providing electrical protection in an electrical system is provided. The self supplied protection relay is powered on by the line current, at least one phase line that it is measuring. To power on the self supplied relay and to have it fully operational, the relay requires certain minimum current and time. During the power ON condition for the relay (eg during reset of fault condition) or when there is a load change, inrush condition may result and in order to have the relay not generate trip signal to trip the line, usually the threshold limits are set high creating difficulty in providing sensitive earth fault detection. The self supplied protection relay is provided with a current processing module adapted to measure and evaluate line current to generate trip signal. The current processing module has an inrush current suppression to block earth fault detection during an inrush condition and thereby increase sensitivity of fault detection.

In one embodiment, the self powered protection relay is adapted to provide wide operating range of 0.1 times the nominal current to 20 times the nominal current for protection setting and offers Definite Minimum Time (DMT) and Inverse Definite Minimum Time (IDMT) characteristics curve settings. In another embodiment, the relay is adapted to provide a selectable external and internal earth current measurement technique to provide earth fault protection.

In another embodiment, the relay performs harmonic analysis using Discrete Fourier Transform (DFT) techniques to automatically detect fundamental frequency and performs internal settings. The harmonic contents (for second harmonics) are also computed to use for computation of harmonics factor to detect inrush condition. The inrush condition detection is provided as a firmware solution in the relay.

In another embodiment, the relay utilizes previous stored calibration factors for correcting phase current and earth current measurements obtained from calibration procedure relating measured output value with the provided input in all the gain sections (gain sub ranges in automatic gain control module) provided in the relay.

In yet another embodiment, the inrush suppression logic used in the relay is provided. The logic uses detection of the conditions such as a) current signal not being in a steady state condition; b) the value of current being more than approximately 10% of the current sensor nominal value; c) the value of current being below the preset fault threshold value; and d) the harmonic content in the current signal at the second harmonic as a ratio to the harmonic content at the fundamental frequency exceeds the preset harmonic ratio threshold, to detect inrush condition. \

In the embodiment, the steady state condition is detected based on any of the following condition a) the value of current at the fundamental frequency falls approximately below 10% of the current sensor nominal value; and b) the value of current at the fundamental frequency falls approximately in the range of 95% to 105% of the value of current at the fundamental frequency in the previous period when measured for at least one period.

### Brief Description of the drawings

Other features and advantages will become apparent to those skilled in the art upon reading the description of the preferred exemplary embodiments in conjunction with the accompanying drawings, wherein:
Figure 1 provides configurations for the protection relay as per an embodiment of the invention;
Figure 2 provides a block diagram of components of the protection relay;
Figure 3 provides an inrush suppression logic for earth current protection.

### Detailed Description of Preferred embodiments

The invention describes an efficient self-powered three phase non-directional overcurrent and earth-fault protection IED provided with various DMT and IDMT characteristics curves for configuration.

The self powered relays derive their operating power from the very current transformers that are being used for the measurement. They do not use any auxiliary power to operate their electronics circuit. Therefore, self powered relays do require minimum current to get fully powered on. Higher the current above the minimum required current, lower will be the time required for relay to get powered on. Higher the current means more is the energy available to power the relay.

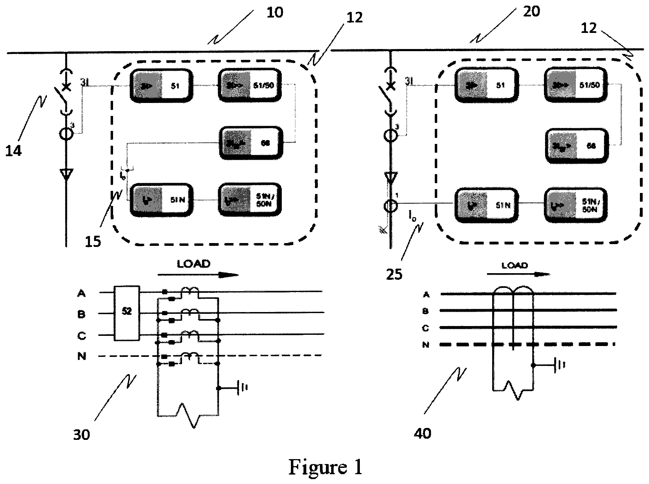

The self powered relay provides both earth fault protection and also the inrush protection. The earth fault protection is provided in the manner depicted in Figure 1. The relay 12 on detection of fault trips the circuit breaker 14. The following configurations are provided by the relay 12:
1. Internal earth fault protection: In this configuration 10, the relay, 12 measures the earth current by soft calculation, 15. It measures the 3 phase currents with the residual current measurement arrangement 30 and their vector summation gives the earth current magnitude and phase.
2. Earth fault protection through dedicated earth fault CT: In this configuration 20, the relay, 12 has a connection, 25 for an external core balance CT (CBCT) used for earth fault detection with the arrangement 40. The CBCT magnetically senses the resultant of 3 phase currents that is nothing but the system earth current. This type of measurement may be preferred for more accurate and sensitive measurement.

The relay has two stage low-set and high-set non-directional overcurrent and earth-fault protection stages. The relay supports Definite time (DMT) and inverse DMT (IDMT) characteristics for both phase and earth-fault protection. The operation of the low-set overcurrent stage I> and the low-set earth fault stage 10> is based on definite time or inverse time characteristics, as selected by the user. The high-set stage has instantaneous and definite time characteristics.

When IDMT characteristic has been selected, the operating time of the stage will be a function of the current; the higher the current, the shorter the operating time. The stage includes seven time/current curve sets- four according to the BS 142 and IEC 60255 standards namely normal inverse, very inverse, extremely inverse and long time inverse and three special curves, name RI type curve, HR fuse curve and FR fuse curve.

The relay offers sensitive earth fault protection with wide operating range of 0.1 Iₙₒₘᵢₙₐₗ to 20 Iₙₒₘᵢₙₐₗ, in both selectable external or internal vector summation earth current measuring techniques. The nominal value is 1 A in case of external earth and will be same as overcurrent stage in case of internal earth selection. Earth fault protection has both low-set and high-set stages with wide settings range. The low-set stage is also available with selectable DMT/IDMT characteristics where along with four standard IDMT characteristics (i.e.NI, EI, VI and LI) it also has special characteristics eg. RI, HR and FR, for better co-ordination within the electrical network. These protection stages are made adaptive to operating frequency of line inputs (range from 45Hz to 65Hz) by incorporating frequency estimation algorithm.

A reliable protection is achieved by incorporating better design of earth CT and employing algorithm for curve fitting with calibration process of earth CT characteristics. The challenge with the CT design is the size against the required dynamic faithful measurement range 0.1A to 20A absolute at a given burden of 0.1VA. With respect to size to VA ratio, it is a difficult design. Precision is required with respect to CT performance at lower currents. All above this, sensitivity at lower points is further improved and false tripping avoided by inrush discrimination protection algorithm which utilizes fundamental and second harmonic component values measured by a DFT (Discrete Fourier Transform) algorithm. In case any inrush detection in phase, the earth protection gets blocked automatically. This helps in allowing system power on with sensitive earth fault protection settings.

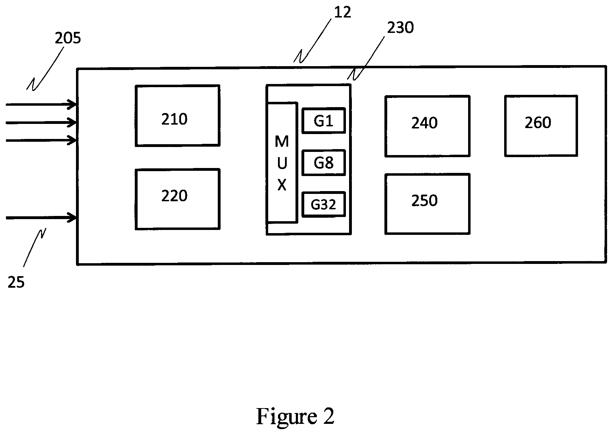

The components relevant for calibration from the block diagram of the relay is illustrated in Figure 2. The relay has input terminals for interface to three phase line, 205 and earth line, 25 by using sensing CTs (not shown in this figure). As the relay is a self powered relay that extracts power from the 3 phase line currents for getting into operation fully, dynamic control of current flow i.e. VBUS control is required and that is provided with controlled MOSFET Switching, 210 to power the relay without disturbing current measurement and effective charging the power supply for the relay from the current in the line (minimize time). The relay has a controller 240 to perform software computation and manage operation of the relay. The other modules relevant for calibration are zero cross over sensing module, 220 and harmonic analyzer (not shown in the figure) using DFT algorithm to provide automatic frequency detection and measurement of current signal. Current evaluation module 250 is also depicted in the figure as it represents the firmware used in the relay for operations involving processing of current signal for measurement and protection. The gain control module 230 using multiplexer (Mux) and various amplifiers along with the output module 260 are depicted in the figure and these modules help selection of appropriate gain for measurement and also operated in calibration procedure.

The relay with its separate analog measurement channels for 3 phase and 1 earth currents provides phase and earth current measurement range (e.g. for earth current it is 0.1A to 20A absolute and for phase it is 75mA to 6.5A absolute on the secondary side of the external current transformer) and to provide for this range, for better measurement, the range has been divided in to 3 sections (depicted in the gain control module 230 in Figure 2) called the gain stages in the relay. Each gain stage helps to condition or scale given current section in to 0V to 3.3V. This is required for accurate current measurement.

The relay is designed to have 3 gain stages called,
Gain 1
Gain 8 and
Gain 32

Calibration is required to eliminate or minimize the measurement errors coming because of analog circuit components and quantization errors. Each of the gain forms a different analog circuit for a given analog channel. For example if we consider phase 1, it has got 3 analog channel routs: one for gain 1, second for gain 8 and third for gain 32. It is therefore, important that relay gets calibrated for each of the phase and each of the gain.

So, in total there are 12 calibration constants identified during calibration process for 3 phases plus 1 external earth channel.

In calibration process reference signal at 50 Hz for each line currents at different gain stages as an input are given to calibrate the system. For that it computes calibration factors & stores them in the nonvolatile memory (EEPROM) provided in the relay.

Power on trip time is a term being used for any relay (auxiliary or self powered) when relays are being switched in to a faulty system. The time taken by relay to clear the fault when switched in (relay power "off to "on" condition and protection function time set to minimum possible by relay) to faulty system is called the "power on trip time". Here, the optimal power on trip time refers the minimum power on trip time for a given self powered relay. Design optimization is made to minimize the power on trip time by having efficient algorithm for measurement and protection and with a good balance between the hardware and firmware implementation of the features of the relay.

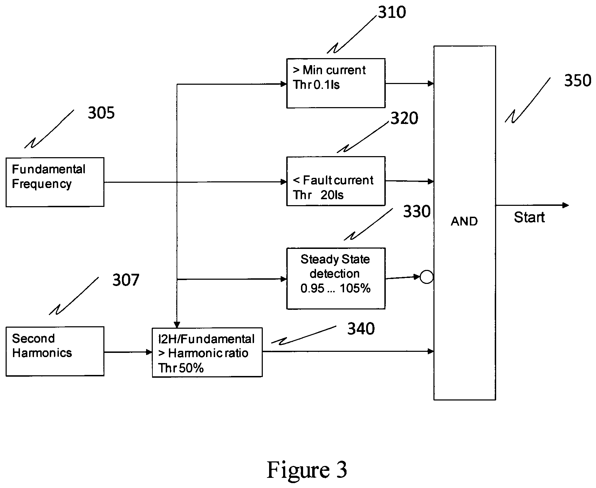

The power on trip time is minimal, also with the inrush suppression feature to provide sensitive earth fault protection. As an exemplary illustration of the design of this feature, the logic for inrush detection is depicted in Figure 3 and the algorithm is as follows:

### Operation criteria for inrush suppression

If for at least one phase current, the logical combination of the following parameters may be considered:
1. Current is not in steady-state condition, (steady state condition 330 is negated in the logic block 350)
   AND
2. Current value at fundamental frequency is above 10% of sensor nominal value(i.e. min. current threshold), 310
   AND
3. Current value is below the preset threshold (i.e. Fault current threshold), 320
   AND
4. Harmonic ratio 340 between current values at 2^{nd} harmonic 307 and that at the fundamental frequency 305 exceeds the preset threshold (i.e. Harmonic ratio threshold),
then the protection function is started i.e the trip signal is not blocked. It will remain in start state until the above conditions remain true. The logic used here is that of the AND, depicted as a logical block 350 in Figure 3, requires all the factors stated to be true, illustrated as an example. It is to be noted that inrush protection may be implemented with other related factors as well and be combined together using other logical combination. The above illustration in Figure 3 and the algorithm are provided only as an exemplary case.

The algorithm for detection of the steady-state condition is based on detection of the following condition:
1. Current value at fundamental frequency falls below 10% of sensor nominal value OR
2. Current value at fundamental frequency is between 95% and 105% of the previous period for at least one period.

The symbols/reference numbers used in the inventions are:

| **Protection** | **IEC** | **ANSI** |
|---|---|---|
| Three phase overcurrent protection, low-set stage | 3I> | 51 |
| Three phase overcurrent protection, high-set stage | 3I>> | 50 / 51 |
| Earth-fault protection, low-set stage | I₀> | 51N |
| Earth-fault protection, high-set stage | I₀>> | 50N / 51N |
| Three phase transformer inrush detector | 3I_{2f}> | 68 |

The feature described in the invention though illustrated for self powered protection relay is also applicable for protection relay including self powered relay provided with auxiliary power source. The inrush suppression feature though illustrated for earth fault protection is also applicable for phase current fault or any other fault condition that requires inrush suppression for better performance.

While only certain features of the invention have been illustrated and described herein, many modifications and changes will occur to those skilled in the art. It is, therefore, to be understood that the appended claims are intended to cover all such modifications.

## Claims

1. A self powered protection relay (12) for providing electrical protection in an electrical system, the electrical protection provided by measurement of current in at least one phase line in a medium voltage power line and generation of a trip signal on detection of overcurrent and earth fault condition in the medium voltage power line to operate a circuit breaker (14) for electrical protection comprising:
a power supply module adapted to power the self powered protection relay from the at least one phase line that the self-powered relay is measuring to offer electrical protection in the electrical system; and
a current processing module adapted to measure and evaluate current in the at least one phase line to generate the trip signal;
wherein the current processing module is adapted to provide inrush current suppression to block detection of earth fault condition during an inrush condition; **characterized in that**
the self powered protection relay (12) is adapted to provide
a selectable external (20) and internal (10) earth current measurement technique to provide earth fault protection, wherein the earth current is measured by soft calculation (15) in the internal (10) earth current measurement technique, and wherein the external (20) earth current measurement technique employs a connection (25) for an external core balance current transformer CT for sensing a system earth current.

2. The self powered protection relay according to claim 1, **characterized in that** the self-powered protection relay (12) provides a provision for low threshold value setting for earth fault protection of approximately 0.1 times the nominal current rating of the self powered protection relay (12).

3. The self powered protection relay according to claim 1, **characterized in that** the self powered protection relay (12) is adapted to provide fault protection in approximately the operating range of 0.1 times the nominal current rating of the self powered protection relay (12) to 20 times the nominal current rating of the self powered protection relay (12).

4. The self powered protection relay according to claim 1, further comprises a selectable Definite Minimum Time (DMT) and Inverse Definite Minimum Time (IDMT) characteristics for protection.

5. The self powered protection relay according to claim 1, **characterized in that** the current processing module automatically detects a medium voltage power line fundamental frequency from evaluation of current in the at least one phase line.

6. The self powered protection relay according to claim 1, **characterized in that** the inrush condition detection is provided as a firmware in the self powered protection relay (12).

7. The self powered protection relay according to claim 1, **characterized in that** the current processing module provides accurate measurement of current in the at least one phase line with the help of stored calibration factors obtained from calibration procedures to relate measured values with signals at an input for phase and external earth channels in the self powered protection relay.

8. The self powered protection relay according to claim 1, **characterized in that** the current processing module determines inrush condition in the at least one phase line based on one or more states of a) current signal not being in a steady state condition; b) the value of current being more than approximately 10% of the current sensor nominal value; c) the value of current being below the preset fault threshold value (320); and d) the harmonic content in the current signal at the second harmonic (307) as a ratio (340) to the harmonic content at the fundamental frequency (305) exceeds a preset harmonic ratio threshold.

9. The self powered protection relay according to claim 8, **characterized in that** the current processing module determines the state condition as steady based on one or more states of a) the value of current at the fundamental frequency falls approximately below 10% of the current sensor nominal value; and b) the value of current at the fundamental frequency (305) falls approximately in the range of 95% to 105% of the value of current at the fundamental frequency (305) in the previous period when measured for at least one period of the current signal.

## Patentansprüche

1. Eigengespeistes Schutzrelais (12), um einen elektrischen Schutz in einem elektrischen System bereitzustellen, wobei der elektrische Schutz durch eine Strommessung in mindestens einer Phasenleitung in einer Mittelspannungsenergieleitung und das Generieren eines Auslösesignals beim Erfassen eines Überstroms und Erdschlusszustands in der Mittelspannungsenergieleitung zum Betätigen eines Schutzschalters (14) zum elektrischen Schutz bereitgestellt wird, Folgendes umfassend:
ein Energieversorgungsmodul, das dazu angepasst ist, das eigengespeiste Schutzrelais aus der mindestens einen Phasenleitung, die das eigengespeiste Schutzrelais misst, um einen elektrischen Schutz im elektrischen System zu bieten, mit Energie zu versorgen; und
ein Stromverarbeitungsmodul, das dazu angepasst ist, den Strom in der mindestens einen Phasenleitung zu messen und auszuwerten, um das Auslösesignal zu generieren;
wobei das Stromverarbeitungsmodul dazu angepasst ist, eine Einschaltstromunterdrückung bereitzustellen, um eine Erdschlusszustandserfassung während eines Einschaltstromzustands zu blockieren;
**dadurch gekennzeichnet, dass**
das eigengespeiste Schutzrelais (12) dazu angepasst ist, eine auswählbare externe (20) und interne (10) Erdstrommesstechnik bereitzustellen, um einen Erdschlussschutz bereitzustellen, wobei der Erdstrom in der internen (10) Erdstrommesstechnik durch Soft-Berechnung (15) gemessen wird, und wobei die externe (20) Erdstrommesstechnik eine Verbindung (25) für einen externen Kernausgleichsstromwandler CT einsetzt, um einen Systemerdstrom abzutasten.

2. Eigengespeistes Schutzrelais nach Anspruch 1, **dadurch gekennzeichnet, dass** das eigengespeiste Schutzrelais (12) eine Vorkehrung für eine niedrige Schwellenwerteinstellung zum Erdschlussschutz von ungefähr dem 0,1-fachen Nennstrom des eigengespeisten Schutzrelais (12) bereitstellt.

3. Eigengespeistes Schutzrelais nach Anspruch 1, **dadurch gekennzeichnet, dass** das eigengespeiste Schutzrelais (12) dazu angepasst ist, einen Fehlerschutz in ungefähr dem Betriebsbereich des 0,1-fachen Nennstroms des eigengespeisten Schutzrelais (12) bis 20-fachen Nennstroms des eigengespeisten Schutzrelais (12) bereitzustellen.

4. Eigengespeistes Schutzrelais nach Anspruch 1, das darüber hinaus eine auswählbare definite Mindestzeit-(DMT)- und eine inverse definite Mindestzeit-(IDTM)-Eigenschaft zum Schutz umfasst.

5. Eigengespeistes Schutzrelais nach Anspruch 1, **dadurch gekennzeichnet, dass** das Stromverarbeitungsmodul automatisch eine Mittelspannungsenergieleitungsgrundfrequenz aus der Stromauswertung in der mindestens einen Phasenleitung erfasst.

6. Eigengespeistes Schutzrelais nach Anspruch 1, **dadurch gekennzeichnet, dass** die Einschaltstromzustandserfassung als Firmware im eigengespeisten Schutzrelais (12) vorgesehen ist.

7. Eigengespeistes Schutzrelais nach Anspruch 1, **dadurch gekennzeichnet, dass** das Stromverarbeitungsmodul eine genaue Strommessung in der mindestens einen Phasenleitung mit Hilfe gespeicherter Kalibrierungsfaktoren bereitstellt, die aus Kalibrierungsverfahren erhalten sind, um Messwerte mit Signalen an einem Eingang für Phasen- und externe Erdkanäle im eigengespeisten Schutzrelais in Beziehung zu setzen.

8. Eigengespeistes Schutzrelais nach Anspruch 1, **dadurch gekennzeichnet, dass** das Stromverarbeitungsmodul eine Einschaltbedingung in der mindestens einen Phase auf Grundlage eines Zustands oder mehrerer Zustände bestimmt, und zwar a) ein Stromsignal befindet sich nicht in einem Beharrungszustand; b) der Stromwert beträgt mehr als ungefähr 10% des Stromsensornennwerts; c) der Stromwert liegt unter dem voreingestellten Fehlerschwellenwert (320); und d) der Oberwellengehalt im Stromsignal bei der zweiten Oberwelle (307) als Verhältnis (340) zum Oberwellengehalt bei der Grundfrequenz (305) übersteigt einen voreingestellten Oberwellenverhältnisschwellenwert.

9. Eigengespeistes Schutzrelais nach Anspruch 8, **dadurch gekennzeichnet, dass** das Stromverarbeitungsmodul den Zustand als Beharrungszustand auf Grundlage eines Zustands oder mehrerer Zustände bestimmt, und zwar a) der Stromwert bei der Grundfrequenz fällt ungefähr unter 10% des Stromsensornennwerts; und b) der Stromwert bei der Grundfrequenz (305) fällt, über mindestens eine Periode des Stromsignals gemessen, ungefähr in den Bereich von 95% bis 105% des Stromwerts bei der Grundfrequenz (305) in der vorherigen Periode.

## Revendications

1. Relais de protection auto-alimenté (12) pour fournir une protection électrique dans un système électrique, la protection électrique fournie par mesure de courant dans au moins une ligne de phase dans une ligne d'alimentation de moyenne tension et génération d'un signal de déclenchement en détection de surintensité et un état de défaut à la terre dans la ligne de puissance moyenne tension pour faire fonctionner un disjoncteur (14) pour une protection électrique comprenant:
un module d'alimentation adapté pour alimenter le relais de protection auto-alimenté de là au moins une ligne de phase que le relais auto-alimenté mesure pour offrir une protection électrique dans le système électrique; et
un module de traitement de courant adapté pour mesurer et évaluer le courant dans la au moins une ligne de phase pour générer le signal de déclenchement ;
dans lequel le module de traitement actuel est adapté pour fournir une suppression de courant d'attaque pour bloquer la détection d'une condition de défaut à la terre pendant un état d'attaque;
**caractérisé en ce que**
relais de protection auto-alimenté (12) est adapté pour fournir une technique de mesure de courant de terre externe (20) et interne (10) sélectionnable pour fournir une protection contre les défauts de terre, dans lequel le courant de terre est mesuré par un calcul doux (15) dans l'intérieur (10) technique de mesure de courant de terre, et dans lequel la technique de mesure de courant de terre externe (20) emploie une connexion (25) pour un transformateur de courant de courant de noyau externe CT pour détecter le courant de terre du système.

2. Relais de protection auto-alimenté selon la revendication 1, **caractérisé en ce que** le relais de protection auto-alimenté (12) fournit une disposition pour un faible niveau de seuil pour la protection contre les défauts de terre d'environ 0,1 fois le courant nominal du relais de protection auto-alimenté (12).

3. Relais de protection auto-alimenté selon la revendication 1, **caractérisé en ce que** le relais de protection auto-alimenté (12) est adapté pour fournir une protection contre les défauts dans approximativement la plage de fonctionnement de 0,1 fois le courant nominal du relais de protection auto-alimenté (12) à 20 fois le courant nominal du relais de protection auto-alimenté (12).

4. Relais de protection auto-alimenté selon la revendication 1, comprend en outre des caractéristiques sélectionnables de temps minimum défini (DMT) et de durée minimale inverse (IDMT) pour la protection.

5. Relais de protection auto-alimenté selon la revendication 1, **caractérisé en ce que** le module de traitement actuel détecte automatiquement une fréquence fondamentale de la ligne de puissance de moyenne tension à partir de l'évaluation du courant dans là au moins une ligne de phase.

6. Relais de protection auto-alimenté selon la revendication 1, **caractérisé en ce que** la détection de l'état de l'enroulement est fournie en tant que microprogramme dans le relais de protection auto-alimenté (12).

7. Relais de protection auto-alimenté selon la revendication 1, **caractérisé en ce que** le module de traitement actuel fournit une mesure précise du courant dans la au moins une ligne de phase à l'aide de facteurs d'étalonnage stockés obtenus à partir des procédures d'étalonnage pour relier les valeurs mesurées aux signaux au une entrée pour la phase et les canaux de terre externes dans le relais de protection auto-alimenté.

8. Relais de protection auto-alimenté selon la revendication 1, **caractérisé en ce que** le module de traitement actuel détermine l'état d'attaque dans la au moins une ligne de phase sur la base d'un ou plusieurs états de a) le signal de courant ne se trouvant pas dans un état stable; b) la valeur du courant étant supérieure à environ 10% de la valeur nominale actuelle du capteur; c) la valeur du courant étant inférieure à la valeur de seuil de défaut prédéfinie (320); et d) le contenu harmonique dans le signal actuel à la seconde harmonique (307) en tant que rapport (340) sur le contenu harmonique à la fréquence fondamentale (305) dépasse un seuil de rapport harmonique prédéterminé.

9. Relais de protection auto-alimenté selon la revendication 8, **caractérisé en ce que** le module de traitement actuel détermine la condition d'état stable en fonction d'un ou de plusieurs états de a) la valeur du courant à la fréquence fondamentale tombe approximativement inférieure à 10% valeur nominale du capteur actuel; et b) la valeur du courant à la fréquence fondamentale (305) tombe approximativement dans la plage de 95% à 105% de la valeur du courant à la fréquence fondamentale (305) dans la période précédente, mesurée pendant au moins une période de la période signal actuel.
